(19) Europäisches Patentamt
European Patent Office
Office européen des brevets

(11) EP 2 636 700 B1

(12) **EUROPEAN PATENT SPECIFICATION**

(45) Date of publication and mention of the grant of the patent:
**06.01.2016 Bulletin 2016/01**

(21) Application number: **11836441.3**

(22) Date of filing: **28.10.2011**

(51) Int Cl.:
***C08L 15/00*** *(2006.01)* ***B60C 1/00*** *(2006.01)*
***C08C 19/22*** *(2006.01)* ***C08K 3/36*** *(2006.01)*
***C08K 5/372*** *(2006.01)* ***C08K 5/39*** *(2006.01)*
***C08F 36/04*** *(2006.01)* ***C08C 19/44*** *(2006.01)*
***C08F 4/46*** *(2006.01)* ***C08K 5/00*** *(2006.01)*
***C08K 5/1515*** *(2006.01)* ***C08K 5/36*** *(2006.01)*

(86) International application number:
**PCT/JP2011/074914**

(87) International publication number:
**WO 2012/057308 (03.05.2012 Gazette 2012/18)**

(54) **RUBBER COMPOSITION FOR TIRE AND PNEUMATIC TIRE**
KAUTSCHUKZUSAMMENSETZUNG FÜR REIFEN UND LUFTREIFEN DAMIT
COMPOSITION DE CAOUTCHOUC POUR PNEUMATIQUE ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.10.2010 JP 2010243636**

(43) Date of publication of application:
**11.09.2013 Bulletin 2013/37**

(73) Proprietor: **Sumitomo Rubber Industries, Ltd.**
**Kobe-shi, Hyogo 651-0072 (JP)**

(72) Inventor: **UESAKA Kenichi**
**Kobe-shi**
**Hyogo 651-0072 (JP)**

(74) Representative: **Manitz, Gerhart**
**Manitz, Finsterwald & Partner GbR**
**Martin-Greif-Strasse 1**
**80336 München (DE)**

(56) References cited:
**EP-A1- 2 138 516**
**WO-A1-2010/044252**
**JP-A- 2005 263 892**
**JP-A- 2009 084 485**
**JP-A- 2009 084 485**
**JP-A- 2010 116 546**
**US-A1- 2008 103 246**
**US-A1- 2010 000 639**
**US-A1- 2010 144 946**
**US-B1- 6 359 045**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 636 700 B1

## Description

### TECHNICAL FIELD

The present invention relates to a rubber composition for a tire and also to a pneumatic tire formed from the same.

### BACKGROUND ART

Conventionally, fuel economy of automobiles has been improved by reducing the rolling resistance of tires (i.e. by improving performance in terms of rolling resistance). Still, in these years, there is an increasingly growing demand for more fuel-efficient automobiles. With this demand has come a demand for a rubber composition with lower heat build-up which is used for the preparation of a tread, which occupies a larger portion of a tire, among tire components.

Known as the method for preparing a rubber composition with sufficiently low heat build-up is a method that includes reducing the amount of reinforcing filler in the rubber composition. In this case, however, the hardness of the rubber composition is decreased, and therefore tires formed therefrom are softer. Such tires may disadvantageously impair handling performance (handling stability) of automobiles and exhibit low wet grip performance and abrasion resistance.

Patent Literature 1 teaches that the use of a modified styrene-butadiene rubber, which has been modified with a certain organic silicon compound containing an alkoxy group, achieves an improvement in terms of low heat build-up, high wet grip performance, and high abrasion resistance. However, there still remains room for improvement to achieve satisfactory levels of all of these properties. Moreover, the modified styrene-butadiene rubber used has only one modified end, and modification of both or two or more ends has not been considered.

WO 2010/044252 A1 discloses a rubber composition for a tire comprising: a diene polymer, a modified diene polymer and silica, wherein the modified diene polymer may be one prepared by treating a butadiene and styrene as monomers comprising polymer with 1-[3-(triethoxysilyl)propyl]-4-methylpiperazine as modifying agent.

US 2010/0000639 A1 relates to the use of disulfide compounds, such as for example 1,6-bis(N,N'-dibenzylthiocarbamoyldithio)hexane, as a crosslinking agent for styrene-butadiene rubber compositions.

US 2010/0144946 A1) discloses a rubber composition including $\alpha,\beta$-bis(N,N'-dihydrocarbylthiocarbamamoyldithio)alkane in combination with a styrene-butadiene rubber and silica.

US 2008/0103246 A1 describes a rubber composition including at least 15 % by weight of a terminal-modified diene rubber and 0.5 to 5 phr of a sulfide compound. A similar rubber composition is also known from US 6,359,045 B1.

JP 2009084485 relates to the use of 1,6-bis-(N,N'-dibenzylthiocarbamoyldithio)hexane in combination with a diene rubber and a styrene-butadiene copolymer.

JP 2005-263892 A describes the use of 1,6-bis(N,N-dibenzylthiocarbamoyldithio)hexane in combination with a diene rubber, such as styrene-butadiene rubber.

### CITATION LIST

### PATENT LITERATURE

Patent Literature 1: JP-A 2001-114938

### SUMMARY OF INVENTION

### TECHNICAL PROBLEM

The present invention aims to solve the above problem and to provide a rubber composition for a tire which has the great advantages of low heat build-up (high fuel economy), high wet grip performance, and high abrasion resistance, and a pneumatic tire with a tire component (especially, a tread) formed from the rubber composition for a tire.

### SOLUTION TO PROBLEM

The present invention relates to a rubber composition for a tire, including: a diene polymer; silica; and a compound represented by the formula (2) shown below, the diene polymer being a modified diene polymer obtained by reacting a compound (A) and a compound (B), with the modifying agent being a compound represented by the following formula (4):

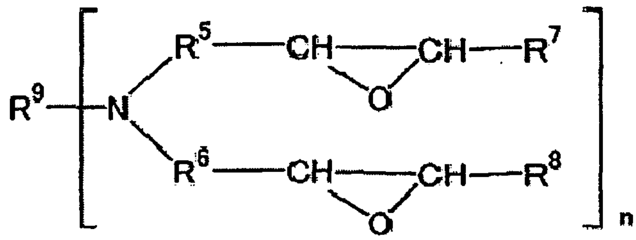

(4)

wherein $R^5$ and $R^6$ are the same as or different from each other and each represent a branched or unbranched $C_{1-10}$ hydrocarbon group which may contain at least one selected from the group consisting of an ether group and a tertiary amine group; $R^7$ and $R^8$ are the same as or different from each other and each represent a hydrogen atom, or a branched or unbranched $C_{1-20}$ hydrocarbon group which may contain at least one selected from the group consisting of an ether group and a tertiary amine group; $R^9$ represents a branched or unbranched $C_{1-20}$ hydrocarbon group which may contain at least one selected from the group consisting of an ether group, a tertiary amine group, an epoxy group, a carbonyl group, and a halogen group; and n represents an integer of 1 to 6, and the compound represented by the formula (2) being present in an amount of 5 to 23 parts by mass relative to 100 parts by mass of a rubber component, wherein the compound (A) is an active alkali metal-terminated conjugated diene polymer obtained by polymerizing a conjugated diene monomer alone or with an aromatic vinyl monomer in the presence of a compound (C); the compound (B) is a modifying agent containing a functional group; the compound (C) is a chemical species obtained by reacting an organic alkali metal compound with a compound represented by the following formula (1):

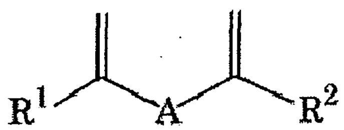

(1)

wherein $R^1$ and $R^2$ are the same as or different from each other and each represent a hydrogen atom, a branched or unbranched alkyl group, a branched or unbranched aryl group, a branched or unbranched alkoxy group, a branched or unbranched silyloxy group, a branched or unbranched acetal group, a carboxyl group, a mercapto group, or a derivative thereof, and A represents a branched or unbranched alkylene group, a branched or unbranched arylene group, or a derivative thereof; and the formula (2) is: $R^3$-S-S-Y-S-S-$R^1$ (2)

wherein Y represents a branched or unbranched $C_{2-10}$ alkylene group, and $R^3$ and $R^4$ are the same as or different from each other and each represent a monovalent branched or unbranched organic group containing a nitrogen atom.

The compound represented by the formula (1) is preferably a compound represented by the following formula (3):

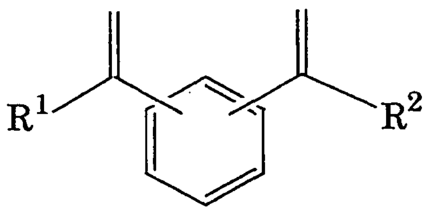

(3)

As set out above, the modifying agent is a compound represented by the following formula (4):

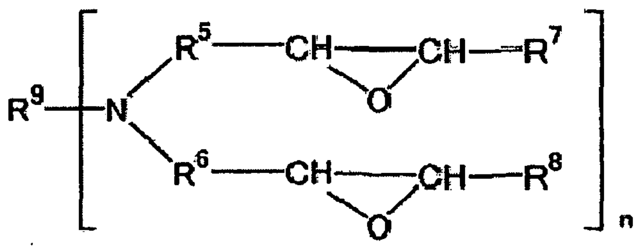

(4)

wherein $R^5$ and $R^6$ are the same as or different from each other and each represent a branched or unbranched $C_{1-10}$ hydrocarbon group which may contain at least one selected from the group consisting of an ether group and a tertiary

amine group; $R^7$ and $R^8$ are the same as or different from each other and each represent a hydrogen atom, or a branched or unbranched $C_{1-20}$ hydrocarbon group which may contain at least one selected from the group consisting of an ether group and a tertiary amine group; $R^9$ represents a branched or unbranched $C_{1-20}$ hydrocarbon group which may contain at least one selected from the group consisting of an ether group, a tertiary amine group, an epoxy group, a carbonyl group, and a halogen group; and n represents an integer of 1 to 6.

The same modifying agent is preferably introduced into both ends of the active conjugated diene polymer.

In the rubber composition for a tire, the diene polymer is preferably present in an amount of 5% by mass or more based on 100% by mass of the rubber component.

Preferably, the conjugated diene monomer is at least one of 1,3-butadiene and isoprene, and the aromatic vinyl monomer is styrene.

The silica preferably has a nitrogen adsorption specific surface area of 40 to 250 $m^2/g$.

The rubber composition for a tire is preferably used as a rubber composition for a tread. The modified diene polymer is preferably a modified styrene-butadiene rubber obtained by polymerizing 1,3-butadiene and styrene.

The present invention also relates to a pneumatic tire formed from the rubber composition.

ADVANTAGEOUS EFFECTS OF INVENTION

Containing a specific modified diene polymer, silica, and a specific amount of a compound represented by the formula (2), the rubber composition for a tire according to the present invention has the great advantages of low heat build-up (high fuel economy), high wet grip performance, and high abrasion resistance. Accordingly, use of the rubber composition for tire components such as a tread provides pneumatic tires with these excellent properties.

DESCRIPTION OF EMBODIMENTS

The rubber composition for a tire of the present invention contains a specific modified diene polymer (hereinafter, also referred to as a modified diene polymer), silica, and a specific amount of a compound represented by the formula (2).

In the present invention, since the chemical species (C), which is obtained by reacting a compound represented by the formula (1) and an organic alkali metal compound, is used as the polymerization initiator in a polymerization reaction, both ends of the polymer chain (the compound (A) (active conjugated diene polymer)) produced by the polymerization reaction are living polymer ends. Therefore, in the present invention, both ends of the active conjugated diene polymer (A) can be modified with the modifying agent (B). Compared with the case that only one end of the polymer is modified, the rubber composition of the present invention has the great advantages of low heat build-up, high wet grip performance, and high abrasion resistance, or in other words these properties have been improved in a balanced manner. Alternatively, there can be considered another method for introducing a functional group (modifying group) into both ends of the polymer. In this method, polymerization is carried out using a polymerization initiator containing a functional group, and a modifying agent is then reacted with the polymerizing end. In this case, the resulting polymer has the functional group derived from the polymerization initiator at one end and the functional group derived from the modifying agent at the other end. However, since the interaction between the functional group of the polymerization initiator and silica is generally weak, the balance of low heat build-up, high wet grip performance and high abrasion resistance should be poor compared to that in the present invention. In addition, the functional group of the polymerization initiator is likely to be eliminated, and may thus cause an increase in energy loss, leading to more heat build-up. Further, in the case of using a polymerization initiator containing a functional group with high polarity, the functional group is coordinated with a living polymer end and affects the reaction between the polymerizing end and the modifying agent. Thus, in this case, a desired functional group cannot be introduced into the polymerizing end. In contrast, in the present invention, since the compound (C) is used as the polymerization initiator, the polymer chain grows in two directions through the polymerization reaction, that is, it has two living polymer ends into which a desired functional group of a modifying agent can be introduced. Therefore, the rubber composition of the present invention is excellent in the balance of low heat build-up, high wet grip performance, and high abrasion resistance.

In the present invention, since the rubber composition also contains a specific amount of a compound represented by the formula (2), the rubber composition is allowed to incorporate a CC bond having high bond energy and high heat stability, which leads to an improvement in terms of low heat build-up, high wet grip performance, and high abrasion resistance. Accordingly, the balance of low heat build-up, high wet grip performance, and high abrasion resistance is further improved.

In the present invention, the diene polymer is a modified diene polymer obtained by reacting the compounds (A) and (B).

The compound (A) is an active alkali metal-terminated conjugated diene polymer obtained by polymerizing a conjugated diene monomer alone or with an aromatic vinyl monomer in the presence of the compound (C). It should be noted that the active conjugated diene polymer has two alkali metal ends.

The compound (C) is a chemical species obtained by reacting an organic alkali metal compound with a compound represented by the following formula (1):

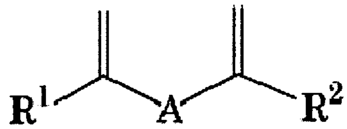

(1)

wherein $R^1$ and $R^2$ are the same as or different from each other and each represent a hydrogen atom, a branched or unbranched alkyl group, a branched or unbranched aryl group, a branched or unbranched alkoxy group, a branched or unbranched silyloxy group, a branched or unbranched acetal group, a carboxyl group (-COOH), a mercapto group (-SH), or a derivative thereof; and A represents a branched or unbranched alkylene group, a branched or unbranched arylene group, or a derivative thereof.

Examples of the alkyl groups for $R^1$ and $R^2$ include branched or unbranched $C_{1-30}$ (preferably $C_{1-8}$, more preferably $C_{1-4}$, and further preferably $C_{1-2}$) alkyl groups such as methyl group, ethyl group, n-propyl group, isopropyl group, n-butyl group, iso-butyl group, sec-butyl group, tert-butyl group, pentyl group, hexyl group, heptyl group, 2-ethylhexyl group, octyl group, nonyl group, and decyl group. Other examples of the alkyl groups include alkyl groups whose hydrogen atom(s) is(are) substituted with aryl group(s) (e.g. phenyl group).

Examples of the aryl groups for $R^1$ and $R^2$ include branched or unbranched $C_{6-18}$ (preferably $C_{6-8}$) aryl groups such as phenyl group, tolyl group, xylyl group, naphthyl group, and biphenyl group. Other examples of the aryl groups include aryl groups whose hydrogen atom(s) is (are) substituted with alkyl group (s) (e.g. methyl group).

Examples of the alkoxy groups for $R^1$ and $R^2$ include branched or unbranched $C_{1-8}$ (preferably $C_{1-6}$, and more preferably $C_{1-4}$) alkoxy groups such as methoxy group, ethoxy group, n-propoxy group, isopropoxy group, n-butoxy group, andt-butoxy group. Other examples of the alkoxy groups include cycloalkoxy groups ($C_{5-8}$ cycloalkoxy groups such as cyclohexyloxy group) and aryloxy groups ($C_{6-8}$ aryloxy groups such as phenoxy group and benzyloxy group).

Examples of the silyloxy groups for $R^1$ and $R^2$ include silyloxy groups substituted with a $C_{1-20}$ aliphatic or aromatic group (e.g. trimethylsilyloxy group, triethylsilyloxy group, triisopropylsilyloxy group, diethylisopropylsilyloxy group, t-butyldimethylsilyloxy group, t-butyldiphenylsilyloxy group, tribenzylsilyloxy group, triphenylsilyloxy group, and tri-p-xylylsilyloxy group). The silyloxy groups may be branched or unbranched.

Examples of the acetal groups for $R^1$ and $R^2$ include groups represented by the formulae: -C(RR')-OR" and -O-C(RR')-OR". Examples of groups represented by the former formula include methoxymethyl group, ethoxymethyl group, propoxymethyl group, butoxymethyl group, isopropoxymethyl group, t-butoxymethyl group, and neopentyloxymethyl group. Examples of groups represented by the latter formula include methoxymethoxy group, ethoxymethoxy group, propoxymethoxy group, i-propoxymethoxy group, n-butoxymethoxy group, t-butoxymethoxy group, n-pentyloxymethoxy group, n-hexyloxymethoxy group, cyclopentyloxymethoxy group, and cyclohexyloxymethoxy group. The acetal groups may be branched or unbranched.

$R^1$ and $R^2$ each are preferably a hydrogen atom, an alkyl group, or an aryl group, and more preferably a hydrogen atom. With this structure, the balance of low heat build-up, high wet grip performance and high abrasion resistance can be further improved. $R^1$ and $R^2$ are preferably the same because the polymer then grows equally in two directions.

Examples of the alkylene groups for A include branched or unbranched $C_{1-30}$ (preferably $C_{1-8}$, and more preferably $C_{1-4}$) alkylene groups such as methylene group, ethylene group, propylene group, butylene group, pentylene group, hexylene group, heptylene group, octylene group, nonylene group, decylene group, undecylene group, dodecylene group, tridecylene group, tetradecylene group, pentadecylene group, hexadecylene group, heptadecylene group, and octadecylene group.

Examples of the derivatives of the alkylene groups for A include alkylene groups substituted with an aryl or arylene group.

Examples of the arylene groups for A include phenylene group, tolylene group, xylylene group, and naphthylene group.

Examples of the derivatives of the arylene groups for A include arylene groups substituted with an alkylene group.

A is preferably an arylene group and is more preferably a phenylene group (i.e., compounds represented by the following formula (3)). With this structure, the balance of low heat build-up, high wet grip performance and high abrasion resistance can be further improved.

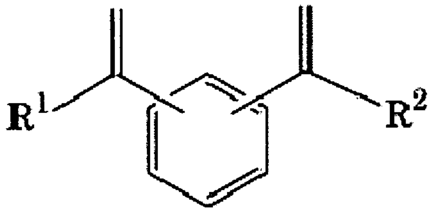

(3)

$R^1$ and $R^2$ in the formula (3) are defined as in the formula (1).

Specific examples of compounds represented by the formula (1) or (3) include 1,2-divinylbenzene, 1,3-divinylbenzene, 1,4-divinylbenzene, 1,2-diisopropenylbenzene, 1,3-diisopropenylbenzene, 1,4-diisopropenylbenzene, 1,2-diisobutenylbenzene, 1,3-diisobutenylbenzene, 1,4-diisobutenylbenzene, 1,3-phenylenebis(1-vinylbenzene), 1,4-phenylenebis(1-vinylbenzene), 1,1'-methylenebis(2-vinylbenzene), 1,1'-methylenebis(3-vinylbenzene), and 1,1'-methylenebis(4-vinylbenzene). Any of these may be used alone, or two or more of these may be used in combination. Among these, 1,3-divinylbenzene, 1,3-diisopropenylbenzene, and 1,3-phenylenebis(1-vinylbenzene) are preferred.

Examples of the organic alkali metal compound used in the present invention include hydrocarbon compounds containing an alkali metal such as lithium, sodium, potassium, rubidium, or cesium. Among these, lithium- or sodium-containing compounds having 2 to 20 carbon atoms are preferred. Specific examples thereof include ethyllithium, n-propyllithium, iso-propyllithium, n-butyllithium, sec-butyllithium, t-octyllithium, n-decyllithium, phenyllithium, 2-naphthyllithium, 2-butyl-phenyllithium, 4-phenyl-butyllithium, cyclohexyllithium, 4-cyclopentyllithium, and 1,4-dilithio-butene-2. Among these, n-butyllithium and sec-butyllithium are preferred because they allow the reaction to proceed rapidly and provide a polymer with a narrow molecular weight distribution.

The method for preparing the compound (C) is not particularly limited, provided that the compound represented by the formula (1) and the organic alkali metal compound are brought into contact. Specifically, the compound (C) can be prepared by separately dissolving the compound represented by the formula (1) and the organic alkali metal compound in an organic solvent that is inert to the reaction, such as a hydrocarbon solvent, and adding dropwise the solution of the organic alkali metal compound to the solution of the compound represented by the formula (1) under stirring. The reaction temperature during the preparation of the compound (C) is preferably 40 to 60°C.

The hydrocarbon solvent that can be used is a solvent that does not deactivate the organic alkali metal compound (alkali metal catalyst), and the hydrocarbon solvent can suitably be selected from aliphatic hydrocarbons, aromatic hydrocarbons, and alicyclic hydrocarbons. Examples thereof include, in particular, those with 2 to 12 carbon atoms such as propane, n-butane, iso-butane, n-pentane, iso-pentane, n-hexane, cyclohexane, propene, 1-butene, iso-butene, trans-2-butene, cis-2-butene, 1-pentene, 2-pentene, 1-hexene, 2-hexene, benzene, toluene, xylene, and ethylbenzene. Two or more of these solvents may be used in admixture.

Examples of the conjugated diene monomer used in the present invention include 1,3-butadiene, isoprene, 1,3-pentadiene (piperylene), 2,3-dimethyl-1,3-butadiene, and 1,3-hexadiene. Considering the physical properties of the resulting polymer and the availability for industrial purposes, 1,3-butadiene and isoprene are preferred among these.

Examples of the aromatic vinyl monomer that can be used in the present invention include styrene, $\alpha$-methylstyrene, vinyltoluene, vinylnaphthalene, divinylbenzene, trivinylbenzene, and divinylnaphthalene. Considering the physical properties of the resulting polymer and the availability for industrial purposes, styrene is preferred among these.

As monomer, the conjugated diene monomer may be used alone, or alternatively, the conjugated diene monomer and the aromatic vinyl monomer may be used in combination. When the conjugated diene monomer and the aromatic vinyl monomer are used in combination, the ratio of the two monomers (conjugated diene monomer/aromatic vinyl monomer) is preferably 50/50 to 90/10, and more preferably 55/45 to 85/15 on a mass basis. If the ratio is less than 50/50, the polymer rubber may be insoluble in a hydrocarbon solvent, and uniform polymerization may then be impossible. Conversely, if the ratio is more than 90/10, the strength of the polymer rubber may be lowered.

When the rubber composition for a tire of the present invention is used as a rubber composition for a tread, the modified diene polymer is preferably a copolymer obtained by copolymerizing the conjugated diene monomer and the aromatic vinyl monomer, and particularly preferably a copolymer obtained by copolymerizing 1,3-butadiene and styrene (modified styrene-butadiene rubber). The use of such a modified copolymer further improves the balance of low heat build-up, high wet grip performance, and high abrasion resistance.

The method for preparing the compound (A) is not particularly limited, provided that the compound (C) is used as the polymerization initiator. Conventionally known methods may be employed. Specifically, the conjugated diene monomer, or the conjugated diene monomer and the aromatic vinyl monomer is/are polymerized by means of the compound (C) as the polymerization initiator in an organic solvent that is inert to the reaction, such as a hydrocarbon solvent, optionally in the presence of a randomizer, whereby the target active conjugated diene polymer having two alkali metal ends is prepared.

As the hydrocarbon solvent, those mentioned in the preparation of the compound (C) can be suitably used.

The randomizer means a compound having a function of controlling the microstructure of the conjugated diene portion in a polymer, for example, increase of 1,2-bond in butadiene units or increase of 3,4-bond in isoprene units, or a function of controlling the compositional distribution of monomer units in a polymer, for example, randomization of butadiene units and styrene units in a butadiene-styrene copolymer.

As the randomizer, various compounds can be used. Considering ease of availability for industrial purposes, ether compounds and tertiary amines are particularly preferred. Examples of the ether compounds include cyclic ethers such as tetrahydrofuran, tetrahydropyran, and 1,4-dioxane; aliphatic monoethers such as diethyl ether and dibutyl ether; aliphatic polyethers such as ethylene glycol dimethyl ether, ethylene glycol diethyl ether, ethylene glycol dibutyl ether, diethylene glycol diethyl ether, and diethylene glycol dibutyl ether; and aromatic ethers such as diphenyl ether and anisole. Examples of the tertiary amines include triethylamine, tripropylamine, and tributylamine, as well as N,N,N'N'-tetramethylethylenediamine, N,N-diethylaniline, pyridine, and quinoline.

The compound (B) is a modifying agent containing a functional group. The compound (B) is preferably a compound containing a functional group that contains at least one atom selected from the group consisting of nitrogen, oxygen, and silicon.

Examples of the functional group include an amino group, an amide group, an alkoxysilyl group, an isocyanate group, an imino group, an imidazole group, an urea group, an ether group (in particular, epoxy group), a carbonyl group, a carboxyl group, a hydroxyl group, a nitrile group, a pyridyl group, and a diglycidylamino group. These functional groups may be substituted. Among these, an amino group, an alkoxysilyl group, an ether group (in particular, epoxy group), a carbonyl group, a hydroxyl group, a carboxyl group, and a diglycidylamino group are preferred because they are highly reactive with silica.

The compound (B) is preferably a compound represented by the following formula (4). It is preferable that the compound (B) be a single compound (or in other words, the same modifying agent be introduced into both ends of the compound (A)). When the compound (B) used is a single compound, the same functional group can be introduced into both ends of the compound (A) so that the polymer has uniform ends, which allows the reactivity of the polymer with silica to be stable.

The compound represented by the following formula (4) is a polyfunctional compound having two or more epoxy groups. When these epoxy groups are allowed to react with the active ends of the active conjugated diene polymer (A), hydroxyl groups can be introduced into the polymer chain. Moreover, since the polyfunctional compound has two or more epoxy groups per molecule, one molecule of the polyfunctional compound can react with the active ends of multiple molecules of the active conjugated diene polymer (A). In this case, two or more polymer chains can be coupled, thereby producing a modified diene polymer having three or more moieties (e.g. ends) that are modified with the polyfunctional compound. As a result of the increase in the number of modified moieties (e.g. ends) in the modified diene polymer, the balance of low heat build-up, high wet grip performance and high abrasion resistance can be improved.

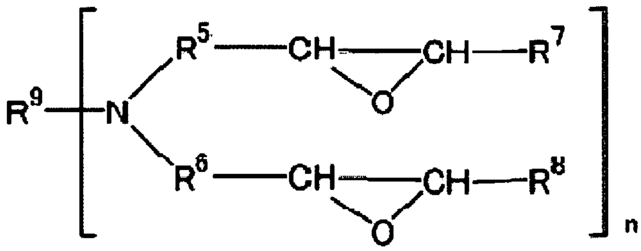

(4)

In the formula (4), $R^5$ and $R^6$ are the same as or different from each other and each represent a branched or unbranched $C_{1-10}$ hydrocarbon group which may contain at least one selected from the group consisting of an ether group and a tertiary amine group; $R^7$ and $R^8$ are the same as or different from each other and each represent a hydrogen atom or a branched or unbranched $C_{1-20}$ hydrocarbon group which may contain at least one selected from the group consisting of an ether group and a tertiary amine group; $R^9$ represents a branched or unbranched $C_{1-20}$ hydrocarbon group which may contain at least one selected from the group consisting of an ether group, a tertiary amine group, an epoxy group, a carbonyl group, and a halogen; and n represents an integer of 1 to 6.

$R^5$ and $R^6$ each are preferably a branched or unbranched $C_{1-10}$ (preferably $C_{1-3}$) alkylene group. $R^7$ and $R^8$ each are preferably a hydrogen atom. Examples of $R^9$ include branched or unbranched $C_{3-20}$ (preferably $C_{6-10}$, and more preferably $C_8$) hydrocarbon groups, and preferred are cycloalkyl groups and cycloalkylene groups such as those represented by the following formulae. Cycloalkylene groups are more preferred.

The compound (B) is a modifying agent containing a functional group.

According to the present invention, the compound (B) is a compound represented by the following formula (4). It is preferable that the compound (B) be a single compound (or in other words, the same modifying agent be introduced into both ends of the compound (A)). When the compound (B) used is a single compound, the same functional group

can be introduced into both ends of the compound (A) so that the polymer has uniform ends, which allows the reactivity of the polymer with silica to be stable.

The compound represented by the following formula (4) is a polyfunctional compound having two or more epoxy groups. When these epoxy groups are allowed to react with the active ends of the active conjugated diene polymer (A), hydroxyl groups can be introduced into the polymer chain. Moreover, since the polyfunctional compound has two or more epoxy groups per molecule, one molecule of the polyfunctional compound can react with the active ends of multiple molecules of the active conjugated diene polymer (A). In this case, two or more polymer chains can be coupled, thereby producing a modified diene time can be selected from wide ranges. Generally, the reaction temperature is in the range from room temperature (25°C) to 80°C and the reaction time is in the range from few seconds to several hours. Any method may be employed for the reaction as long as the compounds (A) and (B) are brought into contact. In one non-limiting preferred method for the reaction, for example, the diene polymer is formed by polymerization using the compound (C), and a predetermined amount of the compound (B) is then added to the polymer solution.

In terms of kneadability, a coupling agent represented by the general formula $R_aMX_b$ may be added before or after the reaction between the compounds (A) and (B) (in the formula, R represents an alkyl group, an alkenyl group, a cycloalkenyl group, or an aromatic hydrocarbon group; M represents a silicon or tin atom; X represents a halogen atom; a represents an integer of 0 to 2; and b represents an integer of 2 to 4). The amount of the coupling agent is preferably 0.03 to 0.4 mol, and more preferably 0.05 to 0.3 mol, relative to 1 mol of the organic alkali metal compound (alkali metal catalyst) used. Use of less than 0.03 mol of the coupling agent provides a little improvement in processability. Conversely, use of more than 0.4 mol of the coupling agent reduces the amount of alkali metal ends that can react with the modifying agent containing a functional group, possibly leading to less improvement in fuel economy.

After completion of the reaction, the modified diene polymer can be coagulated by a coagulation technique as used in the production of rubber by common solution polymerization, such as addition of a coagulant or steam coagulation, and then can be separated from the reaction solvent. The coagulation temperature is not limited at all.

The coagulum separated from the reaction solvent is dried, whereby the diene polymer (modified diene polymer) can be obtained. For drying the coagulum, common driers used in the production of synthetic rubber, such as band driers, extrusion driers and the like, may be used. The drying temperature is not limited at all.

The Mooney viscosity ($ML_{1+4}$) (at 100°C) of the diene polymer is preferably 10 to 200, and more preferably 20 to 150. The upper limit thereof is further preferably not more than 100, and particularly preferably not more than 75. If the Mooney viscosity is less than 10, the mechanical properties (e.g. tensile strength) of the vulcanizate may be deteriorated. Conversely, if the viscosity is more than 200, the diene polymer, when used in combination with other rubbers, may have poor miscibility leading to poor processability. As a result, the resulting rubber composition after vulcanization may have poor mechanical properties. The Mooney viscosity ($ML_{1+4}$) (at 100°C) can be determined in accordance with JIS K 6300-1.

In the rubber composition for a tire of the present invention, the vinyl content of the conjugated diene portion in the diene polymer is preferably 10 to 70 mol%, and more preferably 15 to 60 mol%. The lower limit thereof is further preferably not less than 35 mol%, particularly preferably not less than 40 mol%, and most preferably not less than 50 mol%. If the vinyl content is less than 10 mol%, the glass transition temperature of the polymer may be low, so that when the polymer is used for tires, grip performance (wet grip performance) may be poor. Conversely, if the vinyl content is more than 70 mol%, the glass transition temperature of the polymer may be increased, possibly resulting in poor impact resilience.

In the present invention, the vinyl content (1,2-butadiene unit content) can be determined by infrared absorption spectrometry.

In the rubber composition for a tire of the present invention, the amount of the diene polymer, based on 100% by mass of the rubber component, is preferably not less than 5% by mass, more preferably not less than 10% by mass, further preferably not less than 40% by mass, and particularly preferably not less than 60% by mass. If the amount is less than 5% by mass, low heat build-up, high wet grip performance, and high abrasion resistance may not be obtained sufficiently. The amount of the diene polymer may be 100% by mass, and is preferably not more than 90% by mass.

Examples of rubbers that can be used in addition to the diene polymer in the rubber component include natural rubber (NR), butadiene rubber (BR), styrene-butadiene rubber (SBR), styrene-isoprene-butadiene rubber (SIBR), ethylene-propylene-diene rubber (EPDM), chloroprene rubber (CR), and acrylonitrile-butadiene rubber (NBR). Any of these rubbers may be used alone, or two or more of these may be used in combination. Among these, NR and BR are preferred because they increase the rubber strength (abrasion resistance), and enhance the crack growth resistance.

The NR is not particularly limited, and examples thereof include those commonly used in the tire industry such as SIR20, RSS#3, and TSR20.

When the rubber composition of the present invention contains NR, the amount of NR, based on 100% by mass of the rubber component, is preferably not less than 5% by mass, and more preferably not less than 10% by mass. If the amount is less than 5% by mass, the rubber strength (abrasion resistance) may be insufficient. The amount of NR is preferably not more than 40% by mass, and more preferably not more than 30% by mass. If the amount is more than

40% by mass, the grip performance (wet grip performance) may be deteriorated.

The BR is not particularly limited and examples thereof include BR with a high cis content such as BR1220 and BR1250H (ZEON Corporation), and BR130B and BR150B (Ube Industries, Ltd.); and syndiotactic polybutadiene crystal-containing BR such as VCR412 and VCR617 (Ube Industries, Ltd.). BR with a cis content of not less than 95% by mass is preferred among these because of low glass transition temperature (Tg).

When the rubber composition of the present invention contains BR, the amount of BR, based on 100% by mass of the rubber component, is preferably not less than 5% by mass, and more preferably not less than 10% by mass. If the amount is less than 5% by mass, the crack growth resistance and abrasion resistance may be decreased. The amount of BR is preferably not more than 30% by mass, and more preferably not more than 25% by mass. If the amount is more than 30% by mass, the grip performance (wet grip performance) may be deteriorated.

In the present invention, silica is used. The use of silica together with the diene polymer and the compound represented by the formula (2) leads to very low heat build-up and high rubber strength. The silica is not particularly limited and examples thereof include dry silica (silicic anhydride) and wet silica (hydrous silicic acid). Wet silica is preferred because it has more silanol groups.

The nitrogen adsorption specific surface area ($N_2SA$) of silica is preferably not less than 40 $m^2/g$, more preferably not less than 50 $m^2/g$, further preferably not less than 100 $m^2/g$, and particularly preferably not less than 150 $m^2/g$. If the $N_2SA$ is less than 40 $m^2/g$, the tensile strength tends to be lowered. The $N_2SA$ of silica is preferably not more than 250 $m^2/g$, more preferably not more than 220 $m^2/g$, and further preferably not more than 200 $m^2/g$. If the $N_2SA$ is more than 250 $m^2/g$, the properties in terms of low heat build-up and high processability of the rubber composition tend to be deteriorated.

The nitrogen adsorption specific surface area of silica is determined by the BET method in accordance with ASTM D3037-81.

In the rubber composition of the present invention, the amount of silica is preferably not less than 10 parts by mass, more preferably not less than 20 parts by mass, and further preferably not less than 30 parts by mass, relative to 100 parts by mass of the rubber component. If the amount is less than 10 parts by mass, the effects of added silica tend not to be sufficiently exerted. The amount of silica is preferably not more than 150 parts by mass, more preferably not more than 120 parts by mass, and further preferably not more than 100 parts by mass. If the amount is more than 150 parts by mass, the silica is less likely to be dispersed into the rubber composition, and thus the processability of the rubber composition tends to be deteriorated.

In the present invention, the silica is preferably used with a silane coupling agent. Examples of the silane coupling agent include sulfide, mercapto, vinyl, amino, glycidoxy, nitro, and chloro silane coupling agents. Sulfide silane coupling agents are preferred among these.

As the sulfide silane coupling agent, bis(3-triethoxysilylpropyl)tetrasulfide, bis(2-triethoxysilylethyl)tetrasulfide, bis(3-triethoxysilylpropyl)disulfide, and bis(2-triethoxysilylethyl)disulfide are preferred because they can improve properties in terms of low heat build-up (high fuel economy), high wet grip performance, and high abrasion resistance in a balanced manner. More preferred is bis(3-triethoxysilylpropyl)disulfide.

The amount of silane coupling agent is preferably not less than 1 part by mass, and more preferably not less than 5 parts by mass, relative to 100 parts by mass of silica. If the amount is less than 1 part by mass, the tensile strength and abrasion resistance tend to be remarkably lowered. The amount of silane coupling agent is preferably not more than 15 parts by mass, and more preferably not more than 10 parts by mass, relative to 100 parts by mass of silica. If the amount is more than 15 parts by mass, the effects of added silane coupling agent, such as increase in tensile strength and decrease in rolling resistance, tend not to be sufficiently exerted.

In the present invention, a compound represented by the following formula (2) is used. With the use of the compound, the rubber composition is allowed to incorporate a CC bond having high bond energy and high heat stability, which leads to an improvement in terms of low heat build-up, high wet grip performance, and high abrasion resistance. Moreover, in the present invention, the use of a specific amount of the compound represented by the formula (2) together with the diene polymer and silica further improves the balance of low heat build-up, high wet grip performance, and high abrasion resistance.

$$R^3\text{-S-S-Y-S-S-}R^4 \qquad (2)$$

In the formula (2), Y represents a branched or unbranched $C_{2-10}$ alkylene group, and $R^3$ and $R^4$ are the same as or different from each other and each represent a monovalent branched or unbranched organic group containing a nitrogen atom.

The alkylene group is not particularly limited and examples include linear, branched, or cyclic alkylene groups. Linear (unbranched) alkylene groups are preferred among these.

The carbon number of the alkylene group is preferably 2 to 10, and more preferably 4 to 8. If the carbon number of the alkylene group is 1, the thermal stability tends to be poor to fail to benefit from S-S bonds. If the carbon number

of the alkylene group is 11 or higher, the resulting chain is not shorter than the length of sulfur-bridged chains and therefore is less likely to replace the $-S_x-$.

Examples of the alkylene group satisfying the conditions mentioned above include an ethylene group, a trimethylene group, a tetramethylene group, a pentamethylene group, a hexamethylene group, a heptamethylene group, an octamethylene group, and a decamethylene group. Among these, a hexamethylene group is preferred because the resulting compound can replace the sulfur bridge between polymers smoothly and is also thermally stable.

$R^3$ and $R^4$ are not particularly limited as long as they each are a monovalent branched or unbranched organic group containing a nitrogen atom. The organic group preferably contains at least one aromatic ring, and more preferably contains a linking group represented by -N-C (=S) - in which the carbon atom is to be bonded to the dithio group. The organic group may be a linear, branched, or cyclic group, and is preferably a branched group.

$R^3$ and $R^4$ may be the same as or different from each other. In view of ease of production, they are preferably the same.

Examples of the compound satisfying the conditions mentioned above include 1,2-bis(N,N'-dibenzylthiocarbamoyldithio)ethane, 1,3-bis(N,N'-dibenzylthiocarbamoyldithio)propane, 1,4-bis(N,N'-dibenzylthiocarbamoyldithio)butane, 1,5-bis(N,N'-dibenzylthiocarbamoyldithio)pentane, 1,6-bis(N,N'-dibenzylthiocarbamoyldithio)hexane, 1,7-bis(N,N'-dibenzylthiocarbamoyldithio)heptane, 1,8-bis(N,N'-dibenzylthiocarbamoyldithio)octane, 1,9-bis(N,N'-dibenzylthiocarbamoyldithio)nonane, and 1,10-bis(N,N'-dibenzylthiocarbamoyldithio)decane. Among these, 1,6-bis(N,N'-dibenzylthiocarbamoyldithio)hexane is preferred because it is thermally stable and highly polarizable.

The amount of the compound represented by the formula (2) is preferably not less than 5 parts by mass, more preferably not less than 7 parts by mass, and further preferably not less than 10 parts by mass, relative to 100 parts by mass of the rubber component. Use of less than 5 parts by mass of the compound represented by the formula (2) tends to only have a small effect in improving properties in terms of low heat build-up, high wet grip performance, and high abrasion resistance. The amount of the compound represented by the formula (2) is preferably not more than 23 parts by mass, more preferably not more than 20 parts by mass, further preferably not more than 18 parts by mass, and particularly preferably not more than 15 parts by mass. If the amount of the compound represented by the formula (2) is more than 23 parts by mass, the crosslink density may be so high that the abrasion resistance is deteriorated.

The rubber composition for a tire of the present invention may contain carbon black. The carbon black enhances rubber strength. Examples of the carbon black include GPF, HAF, ISAF, and SAF.

In the case of using carbon black, the nitrogen adsorption specific surface area ($N_2SA$) of carbon black is preferably not less than 30 $m^2/g$, and more preferably not less than 70 $m^2/g$. If the $N_2SA$ is less than 30 $m^2/g$, sufficient reinforcement tends not to be provided. The $N_2SA$ of carbon black is preferably not more than 250 $m^2/g$, and more preferably not more than 150 $m^2/g$. If the $N_2SA$ is more than 250 $m^2/g$, the viscosity of the rubber composition before vulcanization tends to be very high enough to deteriorate processability, and the fuel economy also tends to be poor.

The nitrogen adsorption specific surface area of carbon black is determined by the method A in accordance with JIS K6217.

The dibutyl phthalate (DBP) oil absorption of carbon black is preferably not less than 70 ml/100 g, and more preferably not less than 90 ml/100 g. The DBP oil absorption of carbon black is preferably not more than 160 ml/100 g, and more preferably not more than 117 ml/100 g. When the DBP oil absorption is in such a range, it is possible to improve properties in terms of low heat build-up, high wet grip performance, and high abrasion resistance in a balanced manner.

The DBP oil absorption of carbon black is determined in accordance with JIS K6221.

The amount of carbon black in the rubber composition for a tire of the present invention is preferably not less than 5 parts by mass, and more preferably not less than 8 parts by mass, relative to 100 parts by mass of the rubber component. If the amount is less than 5 parts by mass, sufficient reinforcement tends not to be provided. The amount of carbon black is preferably not more than 60 parts by mass, more preferably not more than 50 parts by mass, and further preferably not more than 30 parts by mass, relative to 100 parts by mass of the rubber component. If the amount is more than 60 parts by mass, the heat build-up tends to be higher.

The silica content based on 100% by mass in total of silica and carbon black is preferably not less than 60% by mass, and more preferably not less than 80% by mass, and is preferably not more than 98% by mass, and more preferably not more than 95% by mass. When the silica content is in such a range, it is possible to improve the fuel economy, wet grip performance, and abrasion resistance at high levels and in a balanced manner.

Examples of vulcanization accelerators that can be used in the present invention include sulfenamide, thiazole, thiuram, thiourea, guanidine, dithiocarbamic acid, aldehyde-amine or aldehyde-ammonia, imidazoline, and xanthate vulcanization accelerators. Among these, sulfenamide vulcanization accelerators are preferred because they allow high initial vulcanization rate.

Examples of the sulfenamide vulcanization accelerators include N-tert-butyl-2-benzothiazolylsulfenamide (TBBS), N-cyclohexyl-2-benzothiazolylsulfenamide (CBS), and N,N'-dicyclohexyl-2-benzothiazolylsulfenamide (DZ). Among these, TBBS and CBS are preferred and CBS is more preferred.

In addition to the aforementioned ingredients, the rubber composition of the present invention may optionally

contain compounding ingredients commonly used in production of rubber compositions. Examples of such compounding ingredients include reinforcing fillers such as clay; zinc oxide; stearic acid; various antioxidants; oils such as aromatic oil; waxes; and vulcanizing agents such as sulfur.

Commonly known methods can be employed as the method for preparing the rubber composition of the present invention. For example, the rubber composition can be prepared by mixing and kneading the ingredients mentioned above with a rubber kneader such as an open roll mill or a Banbury mixer, and then vulcanizing the mixture.

The rubber composition of the present invention can be suitably used for various components of a tire (in particular, treads (cap tread)).

The cap tread refers to an outer surface layer of a tread having a multilayer structure. In the case of a tread having a two-layer structure [an outer surface layer (cap tread) and an inner surface layer (base tread)], for example, the cap tread indicates the outer surface layer.

The pneumatic tire of the present invention can be produced by a usual method with use of the above-mentioned rubber composition. More specifically, the rubber composition of the present invention in which compounding ingredients are added as appropriate, before vulcanization, is extruded and processed into the shape of a tire component (in particular, a tread (cap tread)), and then formed in a usual manner in a tire building machine and assembled with other tire components to provide an unvulcanized tire. Then, the unvulcanized tire is heated and pressed in a vulcanizer into a tire.

The tire of the present invention can be suitably used for passenger vehicles, busses, trucks, and the like.

## EXAMPLES

The present invention will be more specifically described referring to examples, but the present invention is not limited to these examples.

In the following, the chemical agents used in production examples are listed. These chemical agents may optionally be purified by a common method before use.

Cyclohexane: product of Tokyo Chemical Industry Co., Ltd. (purity: 99.5% or higher)

Styrene: product of Tokyo Chemical Industry Co., Ltd. (purity: 99% or higher)

1,3-Butadiene: product of Tokyo Chemical Industry Co., Ltd.

N,N,N',N'-Tetramethylethylenediamine: product of Wako Pure Chemical Industries, Ltd.

n-Butyllithium: product of Wako Pure Chemical Industries, Ltd.

1,3-Divinylbenzene solution in hexane (1.6 M): product of Tokyo Chemical Industry Co., Ltd.

Isopropanol: product of Wako Pure Chemical Industries, Ltd.

2,6-tert-Butyl-p-cresol: product of Wako Pure Chemical Industries, Ltd.

Tetraglycidyl-1,3-bisaminomethylcyclohexane: product of Wako Pure Chemical Industries, Ltd. (compound represented by the following formula (modifying agent))

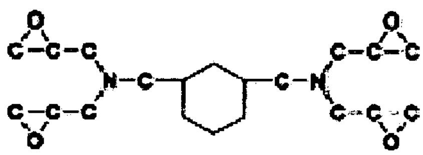

Methanol: product of Kanto Chemical Co., Inc.

### Production Example 1

(Preparation of polymerization initiator)

To a 100-ml pressure-resistant vessel in which air was sufficiently replaced with nitrogen was added 10 ml of a 1, 3-divinylbenzene solution in hexane (1.6 M). Then, 20 ml of a n-butyllithium solution in hexane (1.6 M) was dropwise added to the mixture at 0°C and the resulting mixture was stirred for one hour, whereby a polymerization initiator solution was prepared.

### Production Example 2

(Preparation of diene polymer (modified diene polymer))

To a 1000-ml pressure-resistant vessel in which air was sufficiently replaced with nitrogen were added 600 ml of cyclohexane, 0.12 mol of styrene, 0.8 mol of 1, 3-butadiene, and 0.7 mmol of N,N,N'N'-tetramethylethylenediamine.

Then, 1.5 ml of the polymerization initiator solution prepared in Production Example 1 was added thereto and the resulting mixture was stirred at 40°C. After three hours, 1.0 mmol of the modifying agent tetraglycidyl-1,3-bisaminomethylcyclohexane was added thereto and stirred. After one hour, 3 ml of isopropanol was added to the mixture to terminate the polymerization. After adding 1 g of 2, 6-tert-butyl-p-cresol to the reaction solution, the resulting solution was subjected to reprecipitation treatment with methanol, and the precipitate was heated and dried to give a diene polymer (modified diene polymer having two or more modified moieties (e.g. ends)).

The prepared diene polymer was evaluated as follows.

(Mooney viscosity)

The Mooney viscosity ($ML_{1+4}$/100°C) of the diene polymer was determined in accordance with JIS K 6300-1 "Rubber, unvulcanized - Physical property - Part 1: Determination of Mooney viscosity and pre-vulcanization characteristics with Mooney viscometer". Specifically, a Mooney viscosity tester was preheated for one minute up to 100°C and a small rotor was rotated under this temperature condition. After four-minute rotation, the Mooney viscosity was determined. Here, the obtained values were rounded to the nearest whole number. The results show that the diene polymer had a Mooney viscosity of 60.

(Vinyl content)

The vinyl content of the diene polymer was determined by infrared absorption spectrometry. The results show that the diene polymer had a vinyl content of 57 mol%.

In the following, the chemical agents used in examples and comparative examples are listed.

Diene polymer: diene polymer prepared in Production Example 2

SBR: E15 (S-SBR coupled with an epoxy group-containing compound (tetraglycidyl-1,3-bisaminomethylcyclohexane), styrene unit content: 23% by mass, vinyl unit content: 64% by mass, terminal group: OH (one end-modified SBR), Asahi Kasei Chemicals Corp.)

BR: Nipol BR1220 (cis content: 97% by mass, Zeon Corp.)

NR: RSS#3

Carbon black: Diablack I (N220, $N_2SA$: 114 $m^2/g$, DBP oil absorption: 114 ml/100 g, Mitsubishi Chemical Corp.)

Silica: Ultrasil VN3 ($N_2SA$: 175 $m^2/g$, Degussa)

Silane coupling agent: Si75 (bis(3-triethoxysilylpropyl)disulfide, Evonik Degussa)

Zinc oxide: Zinc oxide #1 (Mitsui Mining & Smelting Co., Ltd.)

Stearic acid: stearic acid "Tsubaki" (NOF Corp.)

Aromatic oil: Process X-140 (JX Nippon Oil & Energy Corp.)

Antioxidant: Antigene 6C (N-(1,3-dimethylbutyl)-N'-phenyl-p-phenylenediamine, Sumitomo Chemical Co., Ltd.)

Wax: SUNNOC N (Ouchi Shinko Chemical Industrial Co., Ltd.)

Sulfur: sulfur powder (Karuizawa Iou K.K.)

Organic crosslinking agent: Vulcuren VP KA9188 (1,6-bis(N,N'-dibenzylthiocarbamoyldithio)hexane, LANXESS)

Vulcanization accelerator (1): Nocceler CZ (N-cyclohexyl-2-benzothiazolylsulfenamide, Ouchi Shinko Chemical Industrial Co., Ltd.)

Vulcanization accelerator (2): Nocceler D (N,N'-diphenylguanidine, Ouchi Shinko Chemical Industrial Co., Ltd.)

Examples 1 to 9 and Comparative Examples 1 to 11

The chemical agents in formulation amounts shown in Table 1, except the sulfur, vulcanization accelerators and organic crosslinking agent, were mixed and kneaded with a Banbury mixer at 165°C for four minutes to provide a kneaded mixture. To the kneaded mixture were added the sulfur, vulcanization accelerators and organic crosslinking agent, and the mixture was kneaded with an open roll mill at 80°C for four minutes to provide an unvulcanized rubber composition. Then, the unvulcanized rubber composition was formed into a tread shape, assembled with other tire components, and vulcanized at 150°C for 35 minutes at 25 kgf to provide a test tire (tire size: 195/65R15).

Each test tire was evaluated as follows. The results are shown in Table 1.

(Fuel economy)

Using a rolling resistance tester, the rolling resistance of each test tire was determined under the running

conditions of: rim 15 × 6JJ, internal pressure 230 kPa, load 3.43 kN, and speed 80 km/h. The results of each tire were expressed as an index relative to a value of 100 representing the rolling resistance of Comparative Example 1. A larger index value corresponds to a higher level of fuel economy, and the index value of not smaller than 105 indicates particularly good fuel economy.

(Wet grip performance)

The wet grip performance was evaluated based on the braking performance determined by an Anti-Lock Brake System (ABS) evaluation test. Specifically, each set of test tires was mounted on a 1800-cc class passenger vehicle equipped with an ABS, and the vehicle was driven on an asphalt road (conditions of road surface: wet, skid number: approximately 50). Then, the brake was stepped on when the speed was 100 km/h, and the distance traveled until the vehicle stopped (stopping distance) was measured. The wet grip performance index of Comparative Example 1 was regarded as 100, and the stopping distance of each formulation was expressed as a wet grip performance index by the following equation. A larger wet grip performance index value corresponds to a higher level of braking performance on a wet road, that is, a higher level of wet grip performance, and the index value of not smaller than 105 indicates particularly good wet grip performance.

$$(\text{Wet grip performance index}) = (\text{Stopping distance of Comparative Example 1})/(\text{Stopping distance of each formulation}) \times 100$$

(Abrasion resistance)

Each set of test tires was mounted on a 1800-cc class passenger vehicle equipped with an ABS, and the decrease in the depth of tire grooves was measured after the vehicle had run 30000 km in a city area. Then, the running distance that decreased the depth of tire grooves by 1 mm was calculated. Giving Comparative Example 1 an index value of 100, the results based on the decrease in the depth of tire grooves of each formulation were expressed as an abrasion resistance index by the following equation. A larger abrasion resistance index value corresponds to a higher level of abrasion resistance, and the index value of not smaller than 105 indicates particularly good abrasion resistance.

$$(\text{Abrasion resistance index}) = (\text{Running distance that decreased tire groove depth by 1 mm for each formulation})/(\text{Running distance that decreased tire groove depth by 1 mm for Comparative Example 1}) \times 100$$

[Table 1]

| | | Comparative Example 1 | Comparative Example 2 | Comparative Example 3 | Comparative Example 4 | Example 1 | Example 2 | Example 3 | Comparative Example 5 | Comparative Example 6 | Example 4 | Example 5 | Example 6 | Comparative Example 7 | Comparative Example 8 | Example 7 | Example 8 | Example 9 | Comparative Example 9 | Comparative Example 10 | Comparative Example 11 |
|---|---|---|---|---|---|---|---|---|---|---|---|---|---|---|---|---|---|---|---|---|---|
| Formulation (part(s) by mass) | Diene polymer | — | — | — | 100 | 100 | 100 | 100 | 100 | 80 | 80 | 80 | 80 | 80 | 80 | 80 | 80 | 80 | 80 | 100 | — |
| | SBR | 100 | 80 | 80 | — | — | — | — | — | — | — | — | — | — | — | — | — | — | — | — | 100 |
| | BR | — | 20 | — | — | — | — | — | — | 20 | 20 | 20 | 20 | 20 | — | — | — | — | — | — | — |
| | NR | — | — | 20 | — | — | — | — | — | — | — | — | — | — | 20 | 20 | 20 | 20 | 20 | — | — |
| | Silica | 75 | 75 | 75 | 75 | 75 | 75 | 75 | 75 | 75 | 75 | 75 | 75 | 75 | 75 | 75 | 75 | 75 | 75 | 75 | 75 |
| | Carbon black | 10 | 10 | 10 | 10 | 10 | 10 | 10 | 10 | 10 | 10 | 10 | 10 | 10 | 10 | 10 | 10 | 10 | 10 | 10 | 10 |
| | Silane coupling agent | 6 | 6 | 6 | 6 | 6 | 6 | 6 | 6 | 6 | 6 | 6 | 6 | 6 | 6 | 6 | 6 | 6 | 6 | 6 | 6 |
| | Zinc oxide | 3 | 3 | 3 | 3 | 3 | 3 | 3 | 3 | 3 | 3 | 3 | 3 | 3 | 3 | 3 | 3 | 3 | 3 | 3 | 3 |
| | Stearic acid | 2 | 2 | 2 | 2 | 2 | 2 | 2 | 2 | 2 | 2 | 2 | 2 | 2 | 2 | 2 | 2 | 2 | 2 | 2 | 2 |
| | Antioxidant | 2 | 2 | 2 | 2 | 2 | 2 | 2 | 2 | 2 | 2 | 2 | 2 | 2 | 2 | 2 | 2 | 2 | 2 | 2 | 2 |
| | Wax | 2 | 2 | 2 | 2 | 2 | 2 | 2 | 2 | 2 | 2 | 2 | 2 | 2 | 2 | 2 | 2 | 2 | 2 | 2 | 2 |
| | Aromatic oil | 20 | 20 | 20 | 20 | 20 | 20 | 20 | 20 | 20 | 20 | 20 | 20 | 20 | 20 | 20 | 20 | 20 | 20 | 20 | 20 |
| | Sulfur | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Organic crosslinking agent | 10 | 10 | 10 | — | 5 | 10 | 23 | 25 | — | 5 | 10 | 23 | 25 | — | 5 | 10 | 23 | 25 | — | — |
| | Vulcanization accelerator (1) | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 |
| | Vulcanization accelerator (2) | 1 | 1 | 1 | 1 | 1 | 1 | 1 | 1 | 1 | 1 | 1 | 1 | 1 | 1 | 1 | 1 | 1 | 1 | 1 | 1 |
| Performance evaluation | Fuel economy | 100 | 105 | 103 | 103 | 108 | 110 | 115 | 117 | 110 | 113 | 115 | 120 | 112 | 106 | 111 | 113 | 118 | 120 | 99 | 90 |
| | Wet grip performance | 100 | 95 | 98 | 104 | 108 | 110 | 114 | 115 | 101 | 105 | 107 | 111 | 112 | 102 | 106 | 108 | 112 | 113 | 100 | 92 |
| | Abrasion resistance | 100 | 105 | 101 | 100 | 105 | 110 | 106 | 104 | 103 | 108 | 110 | 106 | 104 | 102 | 106 | 111 | 106 | 104 | 95 | 85 |

The examples in which a specific modified diene polymer, silica, and a specific amount of a compound represented by the formula (2) were used in combination exhibited the great advantages of low heat build-up (high fuel economy), high wet grip performance, and high abrasion resistance. On the other hand, in the comparative examples in which no combination of the compounds was used, these properties were inferior to those of the examples.

## Claims

**1.** A rubber composition for a tire, comprising:

a diene polymer;
silica; and
a compound represented by the formula (2) shown below,
the diene polymer being a modified diene polymer obtained by reacting a compound (A) and a compound (B), and the compound represented by the formula (2) being present in an amount of 5 to 23 parts by mass relative to 100 parts by mass of a rubber component,
wherein the compound (A) is an active alkali metal-terminated conjugated diene polymer obtained by polymerizing a conjugated diene monomer alone or with an aromatic vinyl monomer in the presence of a compound (C) as a polymerization initiator;
the compound (B) is a modifying agent containing a functional group, with the modifying agent being a compound represented by the following formula (4):

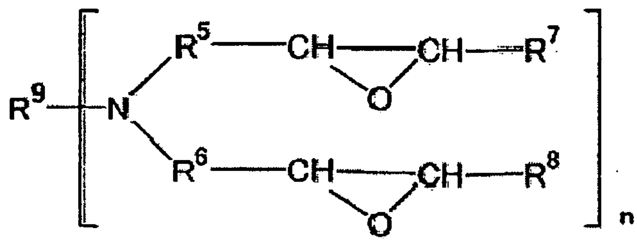

(4)

wherein $R^5$ and $R^6$ are the same as or different from each other and each represent a branched or unbranched $C_{1-10}$ hydrocarbon group which may contain at least one selected from the group consisting of an ether group and a tertiary amine group; $R^7$ and $R^8$ are the same as or different from each other and each represent a hydrogen atom, or a branched or unbranched $C_{1-20}$ hydrocarbon group which may contain at least one selected from the group consisting of an ether group and a tertiary amine group; $R^9$ represents a branched or unbranched $C_{1-20}$ hydrocarbon group which may contain at least one selected from the group consisting of an ether group, a tertiary amine group, an epoxy group, a carbonyl group, and a halogen group; and n represents an integer of 1 to 6;
the compound (C) is a chemical species obtained by reacting an organic alkali metal compound with a compound represented by the following formula (1):

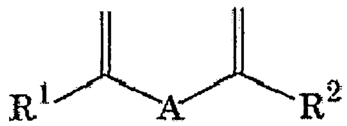

(1)

wherein $R^1$ and $R^2$ are the same as or different from each other and each represent a hydrogen atom, a branched or unbranched alkyl group, a branched or unbranched aryl group, a branched or unbranched alkoxy group, a branched or unbranched silyloxy group, a branched or unbranched acetal group, a carboxy group, a mercapto group, or a derivative thereof, and A represents a branched or unbranched alkylene group, a branched or unbranched arylene group, or a derivative thereof; and
the formula (2) is:

$$R^3\text{-S-S-Y-S-S-}R^4 \qquad (2)$$

wherein Y represents a branched or unbranched $C_{2-10}$ alkylene group, and $R^3$ and $R^4$ are the same as or different from each other and each represent a monovalent branched or unbranched organic group containing a nitrogen atom.

**2.** The rubber composition for a tire according to Claim 1, wherein the compound represented by the formula (1) is a compound represented by the following formula (3):

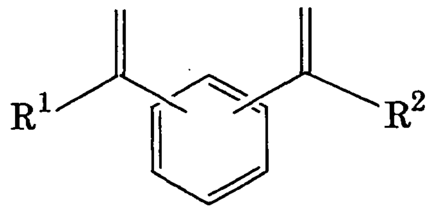

(3)

.

**3.** The rubber composition for a tire according to Claim 1, wherein the same compound is introduced into both ends of the active conjugated diene polymer.

**4.** The rubber composition for a tire according to Claim 1, wherein the diene polymer is present in an amount of 5% by mass or more based on 100% by mass of the rubber component.

**5.** The rubber composition for a tire according to Claim 1, wherein the conjugated diene monomer is at least one of 1,3-butadiene and isoprene, and the aromatic vinyl monomer is styrene.

**6.** The rubber composition for a tire according to Claim 1, wherein the silica has a nitrogen adsorption specific surface area of 40 to 250 $m^2/g$.

**7.** The rubber composition for a tire according to Claim 1, which is used as a rubber composition for a tread.

**8.** The rubber composition for a tire according to Claim 1, wherein the modified diene polymer is a modified styrene-butadiene rubber obtained by polymerizing 1,3-butadiene and styrene.

**9.** A pneumatic tire, formed from the rubber composition according to Claim 1.

**Patentansprüche**

**1.** Kautschukzusammensetzung für einen Reifen enthaltend:

ein Dienpolymer,
Silica und
eine Verbindung wiedergegeben durch die nachfolgende Formel (2),
wobei das Dienpolymer eine modifiziertes Dienpolymer ist, welches durch Reagieren einer Verbindung (A) mit einer Verbindung (B) erhalten worden ist, und
wobei die durch die Formel (2) wiedergegebene Verbindung in einer Menge von 5 bis 23 Massenteilen bezogen auf 100 Massenteile der Kautschukkomponente vorliegt,
wobei die Verbindung (A) ein durch ein aktives Alkalimetall terminiertes konjugiertes Dienpolymer ist, welches erhalten worden ist durch Polymerisieren eines konjugierten Dienmonomers alleine oder mit einem aromatischen Vinylmonomer in der Gegenwart einer Verbindung (C) als Polymerisationsinitiator,
wobei die Verbindung (B) ein Modifizierungsmittel ist, welches eine funktionelle Gruppe enthält, wobei das Modifizierungsmittel eine durch die folgende Formel (4) wiedergegebene Verbindung ist:

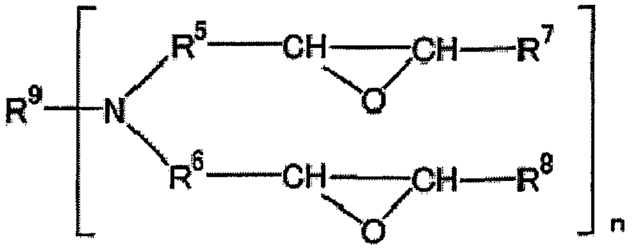

(4)

worin $R^5$ und $R^6$ gleich oder verschieden voneinander sind und jeweils eine verzweigte oder unverzweigte $C_{1-10}$-Kohlenwassersoffgruppe sind, welche wenigstens eine ausgewählt aus der Gruppe bestehend aus einer Ethergruppe und einer tertiären Amingruppe enthalten kann, $R^7$ und $R^8$ gleich oder verschieden voneinander sind und jeweils ein Wasserstoffatom oder eine verzweigte oder unverzweigte $C_{1-20}$-Kohlenwasserstoffgruppe sind, welche wenigstens eine ausgewählt aus der Gruppe bestehtend aus einer Ethergruppe und einer tertiären Amingruppe enthalten kann, $R^9$ eine verzweigte oder unverzweite $C_{1-20}$-Kohlenwasserstoffgruppe ist, welche wenigstens eine ausgewählt aus der Gruppe bestehend aus einer Ethergruppe, einer tertären Amingruppe, einer Epoxygruppe, einer Carbonylgruppe und einer Halogengruppe enthalten kann, und n eine ganze Zahl zwischen 1 und 6 bedeutet,
wobei die Verbindung (C) eine chemische Spezies ist, welche erhalten worden ist durch Reagieren einer organischen Alkalimetallverbindung mit einer durch die nachfolgende Formel (1) wiedergegebenen Verbindung:

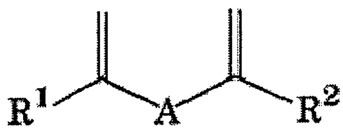

(1)

worin $R^1$ und $R^2$ gleich oder verschieden voneinander sind und jeweils ein Wasserstoffatom, eine verzweigte oder unverzweigte Alkylgruppe, eine verzweigte oder unverzweigte Arylgruppe, eine verzweigte oder unverzweigte Alkoxygruppe, eine verzweigte oder unverzweigte Silyloxygruppe, eine verzweigte oder unverzweigte Acetalgruppe, eine Carboxygruppe, eine Mercaptogruppe oder ein Derivat hiervon sind, und A eine verzweigte oder unverzweigte Alkylengruppe, eine verzweigte oder unverzweigte Arylengruppe oder ein Derivat hiervon ist, und die Formel (2) ist:

$R^3$-S-S-Y-S-S-$R^4$ (2)

worin Y eine verzweigte oder unverzweigte $C_{2-10}$-Alkylengruppe ist und $R^3$ und $R^4$ gleich oder verschieden voneinander sind und jeweils eine monovalente verzweigte oder unverzweigte organische Gruppe, welche ein Stickstoffatom enthält, sind.

**2.** Kautschukzusammensetzung für einen Reifen nach Anspruch 1,
wobei die durch die Formel (1) wiedergegebene Verbindung eine durch die nachfolgende Formel (3) wiedergegebene Verbindung ist;

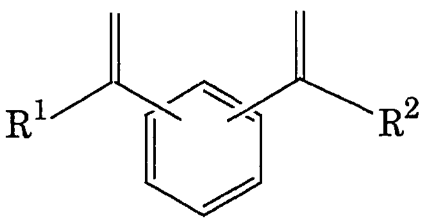

(3)

.

3. Kautschukzusammensetzung für einen Reifen nach Anspruch 1, wobei dieselbe Verbindung in beiden Enden des aktiven konjugierten Dienpolymer eingeführt ist.

4. Kautschukzusammensetzung für einen Reifen nach Anspruch 1, wobei das Dienpolymer in einer Menge von 5 Massen-% oder mehr bezogen auf 100 Massen-% oder mehr der Kautschukkomponente enthalten ist.

5. Kautschukzusammensetzung für einen Reifen nach Anspruch 1, wobei das konjugierte Dienmonomer wenigstens eines von 1,3-Butadien und Isopren ist, und das aromatische Vinylmonmer Styrol ist.

6. Kautschukzusammensetzung für einen Reifen nach Anspruch 1, wobei das Silica eine durch Stickstoff bestimmte spezifische Oberfläche von 40 bis 250 $m^2/g$ aufweist.

7. Kautschukzusammensetzung für einen Reifen nach Anspruch 1, wobei diese als eine Kautschukzusammensetzung für eine Lauffläche verwendet wird.

8. Kautschukzusammensetzung für einen Reifen nach Anspruch 1, wobei das modifizierte Dienpolymer ein modifizierter Styrol-Butadien-Kautschuk erhalten durch Polymerisieren von 1,3-Butadien und Styrol ist.

9. Luftreifen gebildet aus einer Kautschukzusammensetzung nach Anspruch 1.

## Revendications

1. Composition de caoutchouc pour un pneu, comprenant :

un polymère de diène ;
de la silice ; et
un composé représenté par la formule (2) représentée ci-dessous,
le polymère de diène étant un polymère de diène modifié obtenu par réaction d'un composé (A) et d'un composé (B), et
le composé représenté par la formule (2) étant présent dans une quantité de 5 à 23 parties en masse par rapport à 100 parties en masse d'un constituant de caoutchouc,
dans laquelle le composé (A) est un polymère de diène conjugué terminé par un métal alcalin actif obtenu par polymérisation d'un monomère de diène conjugué seul ou avec un monomère vinylique aromatique en présence d'un composé (C) comme un initiateur de polymérisation ;
le composé (B) est un agent de modification contenant un groupe fonctionnel, avec l'agent de modification étant un composé représenté par la formule (4) suivante :

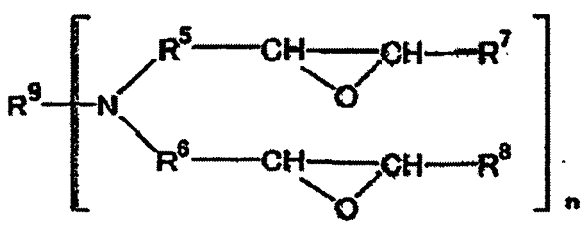

(4)

dans laquelle $R^5$ et $R^6$ sont identiques ou différents l'un de l'autre et représentent chacun un groupe hydrocarboné en $C_{1-10}$ ramifié ou non ramifié qui peut contenir au moins un choisi dans le groupe constitué d'un groupe éther et d'un groupe amine tertiaire ; $R^7$ et $R^8$ sont identiques ou différents l'un de l'autre et représentent chacun un atome d'hydrogène, ou un groupe hydrocarboné en $C_{1-20}$ ramifié ou non ramifié qui peut contenir au moins un choisi dans le groupe constitué d'un groupe éther et d'un groupe amine tertiaire ; $R^9$ représente un groupe hydrocarboné en $C_{1-20}$ ramifié ou non ramifié qui peut contenir au moins un choisi dans le groupe constitué d'un groupe éther, d'un groupe amine tertiaire, d'un groupe époxy, d'un groupe carbonyle, et d'un groupe

halogène ; et n représente un nombre entier de 1 à 6 ;
le composé (C) est une espèce chimique obtenue par réaction d'un composé de métal alcalin organique avec un composé représenté par la formule (1) suivante :

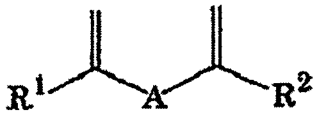

(1)

dans laquelle $R^1$ et $R^2$ sont identiques ou différents l'un de l'autre et représentent chacun un atome d'hydrogène, un groupe alkyle ramifié ou non ramifié, un groupe aryle ramifié ou non ramifié, un groupe alcoxy ramifié ou non ramifié, un groupe silyloxy ramifié ou non ramifié, un groupe acétal ramifié ou non ramifié, un groupe carboxy, un groupe mercapto, ou un dérivé de ceux-ci, et A représente un groupe alkylène ramifié ou non ramifié, un groupe arylène ramifié ou non ramifié, ou un dérivé de ceux-ci ; et
la formule (2) est :

$$R^3\text{-S-S-Y-S-S-}R^4 \qquad (2)$$

dans laquelle Y représente un groupe alkylène en $C_{2-10}$ ramifié ou non ramifié, et $R^3$ et $R^4$ sont identiques ou différents l'un de l'autre et représentent chacun un groupe organique ramifié ou non ramifié monovalent contenant un atome d'azote.

2. Composition de caoutchouc pour un pneu selon la revendication 1, dans laquelle le composé représenté par la formule (1) est un composé représenté par la formule (3) suivante :

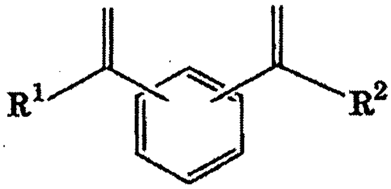

(3)

.

3. Composition de caoutchouc pour un pneu selon la revendication 1, dans laquelle le même composé est introduit aux deux terminaisons du polymère de diène conjugué actif.

4. Composition de caoutchouc pour un pneu selon la revendication 1, dans laquelle le polymère de diène est présent dans une quantité de 5 % en masse ou supérieure rapportée à 100 % en masse du constituant de caoutchouc.

5. Composition de caoutchouc pour un pneu selon la revendication 1, dans laquelle le monomère de diène conjugué est au moins un du 1,3-butadiène et de l'isoprène, et le monomère vinylique aromatique est le styrène.

6. Composition de caoutchouc pour un pneu selon la revendication 1, dans laquelle la silice présente une surface spécifique d'adsorption d'azote de 40 à 250 $m^2/g$.

7. Composition de caoutchouc pour un pneu selon la revendication 1, laquelle est utilisée comme une composition de caoutchouc pour une bande de roulement.

8. Composition de caoutchouc pour un pneu selon la revendication 1, dans laquelle le polymère de diène modifié est un caoutchouc de styrène-butadiène modifié obtenu par polymérisation de 1,3-butadiène et de styrène.

9. Pneumatique, formé à partir de la composition de caoutchouc selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010044252 A1
- US 20100000639 A1
- US 20100144946 A1
- US 20080103246 A1
- US 6359045 B1
- JP 2009084485 B
- JP 2005263892 A
- JP 2001114938 A